# EUROPEAN PATENT APPLICATION

(11) **EP 2 339 807 A1**
(43) Date of publication of application: **29.06.2011**
(21) Application number: 09460058.2
(22) Date of filing: 27.12.2009
(51) Int. Cl.: H04L 29/06, G07F 7/10, G06F 21/00

(54) **Method for generating within a mobile phone application a time-limited client password**

(71) Applicant: Polska Wytwornia Papierow Wartosciowych S.A., 00-222 Warszawa (PL)
(72) Inventor: Cwietkowski, Tomasz, 91-161 Lodz (PL)

(57) **Abstract**

Method for generating within a mobile phone application a time-limited client password that enables access to protected server resources, which is identical to the password generated by the web application of the server, where the moment of beginning the entering of this access password into the mobile phone application is shifted by the time at which this moment is identical or approximate to the moment of beginning the generation of the same access password within the web application of the server. Within the mobile phone application an information is generated and displayed to the client regarding the moment when the generation of the given access password was completed. At this moment the client clicks the synchronisation button on the screen of the web application monitor that calculates the size of the time adjustment required to be entered into the mobile phone application and displays the size of this time correction to the client. The client enters this code into the mobile phone application that on its basis corrects the size of this time adjustment with all system time calls pertaining to the generation of one-time access passwords.

## Description

The present invention pertains to the method for generating within a mobile phone application a time-limited client password that enables access to protected server resources, which is identical to the password generated by the web application of the server. Generating such passwords is obligatory in double authentication systems based on one-time passwords and a client application installed in a mobile phone.

There is known a solution in which one-time passwords are generated in a mobile phone as a result of specific events. Such one-time passwords are not related to the time of generation thereof. Password generation can be initiated by the user at any time. A one-time code may be used at any time provided that it was not previously entered into the authentication system. Mobile phones do not offer the option of generating an event code that would enable synchronisation between the client application and the server application.

Using one-time access passwords generated as a result of specific events ensures a relatively low level of security against unauthorised access to protected resources. A one-time password generated as a result of a specific event has no specified time of validity from the moment of generation to the unspecified moment of future usage. Therefore, unauthorised persons may view the password on the display of the user's mobile phone. Such unauthorised person may also use the owner's lack of attention and generate for himself a one-time password to access the protected resource. By also knowing the static password he may then gain access to this protected resource in a time that is only limited by the moment of the user's next login to access the protected resource.

Another disadvantage of one-time passwords generated as a result of specific events is the possible loss on synchronisation of the mobile phone application with the server application. Usually, when several one-time passwords are generated in a row but are not used to access the protected resource the user is locked out from accessing the resource. In order to lift the lockout an intervention of the administrator of the server containing the protected resource is required to resynchronise the mobile phone application with the server application. The need for such intervention increases the server's hardware requirements and increases the risk of excessive stress on the server, which results from the need to check a group of consecutive one-time passwords in the server's application when the first password in the group was invalid. With a greater number of users logging in the server application may suffer excessive load and become less efficient.

When accessing protected resources it is much safer to use one-time passwords generated in relation to time. Such a password has a relatively short time of validity, usually from 30 to 120 seconds. Therefore, an unauthorised person may access the protected resource with the use of such a password only in the above-mentioned period from the moment of its generation.

For the user to be able to generate, in relation to time, the one-time passwords to access protected resources of a server, devices with highly accurate system clocks are required. To this end specially designed fob keys are used.

System clocks of mobile phones are inaccurate. Because of this mobile phones usually are not used to generate one-time passwords in relation to time as even with accurate setting of such a clock in a mobile phone at the moment of launching the application for the first time the difference between server time and mobile phone application time shall increase with the passage of time. Moreover, time settings in a mobile phone may change for various reasons. One such reason in particular may be a change of time zone, change from winter to summer time or the other way round, or keeping the phone switched off for extended periods of time.

In addition, individual mobile phone manufacturers utilise different user interfaces for different mobile phone models. Therefore, it would be necessary to write and keep updated a universal time setting manual for approximately 500 models of mobile phones available in Poland, which would be very costly.

Also, the user may be unaware that the system time set in his mobile phone is wrong, despite the displayed hour, minutes and date being correct. In such cases the one-time passwords generated in relation to time for accessing the resources would be incorrect and after exceeding the limit of incorrect passwords entered the user would be locked out from using the protected access to the server.

According to the invention, the method pertains to synchronising the generation of a client password, with limited time of validity, to access protected server resources within the mobile phone application with the generation of the same password in the web application of the server. The moment of beginning the entering of this access password into the mobile phone application is shifted by the time at which this moment is identical or approximate to the moment of beginning the generation of the same access password within the web application of the server.

In particular, within the mobile phone application there is generated and communicated to the client visually and/or acoustically an information about the moment in which the generation of the given access password was completed and generation of the next access password was initiated, as well as an information about the number of this time event in accordance with system time of the mobile phone. At this moment the client immediately clicks the synchronisation button on the screen of the web application monitor which then records and saves the moment this event took place in accordance with its own system time. After entering the number of this time event into the web application according to the system time of the mobile phone the web application calculates the size of the time adjustment that must be entered in the mobile phone application and presents the size of this time adjustment to the client in such a manner that it generates a synchronisation code containing information about the size of this adjustment. The client enters this code into the mobile phone application that on its basis corrects the size of this time adjustment with all system time calls pertaining to the generation of one-time access passwords.

The present invention enables the client to determine whether or not and to what degree the moment of beginning the generation of the access password within the mobile phone application differs from the moment of beginning the generation of the same access password within the web application of the server. To this end the mobile phone application and the server's web application generate and present to the client basing on their own system times visual animations, each with a sector of a geometric figure, whose size changes depending on the time that has elapsed from the beginning of validity of the given one-time password. It is best illustrated when the animation is a sector of a circle.

According to the present invention the mobile phone application and the server's web application also present to the client basing on their own system times visually the information that enables explicit identification of the number of the time event. If the information that identifies the current number of a time event generated by the web application of the server is identical to the information identifying the number of the time event generated by the mobile phone application, then the information for the client constitutes the one-time access password to the server's application and it also authenticates the server.

Within the scope of the beneficial solution according to the present invention the information about the current time event number in the application that was generated and presented visually is invisible in the initial stages of validity of this password and becomes better visible with the passing of its time of validity. It may be executed in a fashion that makes the information about the current time event number in the mobile phone that was generated and presented visually completely covered by the animation of the geometric figure in the initial stages of validity of this password and become gradually uncovered by the animation with the passing of its time of validity.

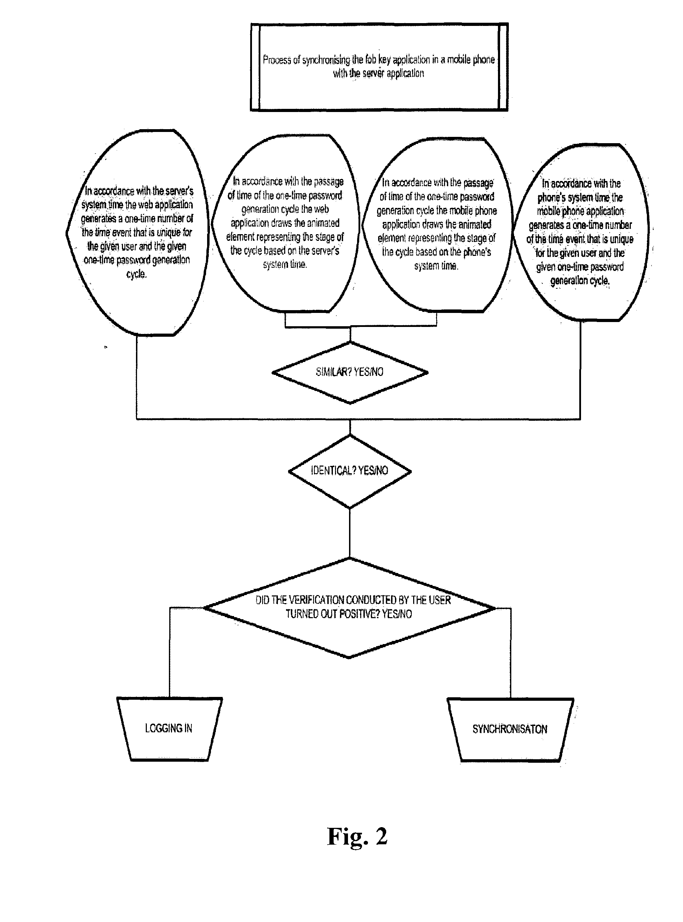

Sample execution of the method of the present invention is indicated in the figure. Figure 1 presents the flowchart of synchronisation according to the present invention; figure 2 presents the flowchart of verifying the synchronisation; figure 3 presents graphically three stages of the cycle of generating a one-time password at the beginning, in the middle and at the end of the period of validity of the same password; and figure 4 presents the flowchart of the process of verifying the server's web application.

To execute the method according to the present invention, the client launches two applications: the mobile phone application and the server's web application.

After launching both applications the client determines whether or not and to what degree the moment of beginning the generation of the one-time access password within the mobile phone application differs from the moment of beginning the generation of the same access password within the web application of the server and whether or not the one-time access passwords generated by both application are identical.

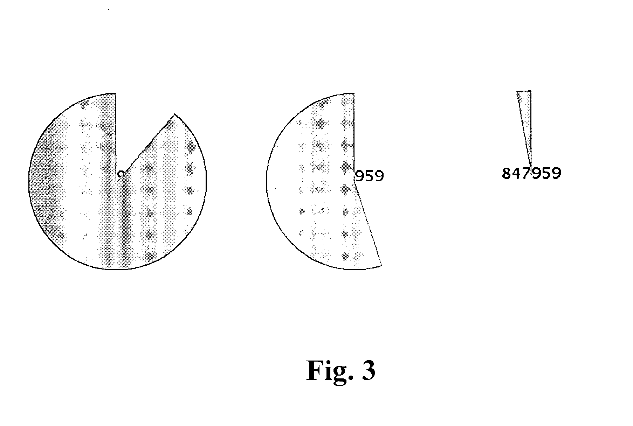

As presented in figure 3 to this end the mobile phone application and server's web application generate and present to the client basing on their respective system times visual animations in the form of a sector of a circle. The size of this sector changes depending on the time that has elapsed from the start of validity of a one-time password generated by the given application. In particular, as shown in the left part of figure 3, at the beginning of the time of validity of a one-time password the circle sector is complete and decreases in size with the passage of time of validity of this one-time password. By the end of validity of the password, as shown in the right part of figure 3, the size of the circle sector decreases to 0%. A sample transitional state is shown in the central part of figure 3.

Basing on their respective system times both the mobile phone application and the server's web application generate and present to the client a coded information about the current one-time password to access the server. As shown in the left part of figure 3, in the beginning stages of validity of the password this information is completely covered by the circle sector animation and as a result - completely invisible. As its time of validity elapses the information is gradually revealed, as illustrated in the central part of figure 3. By the end of the time of validity of a one-time password to access the server application the information about the current one-time password to access the server application provided by the given application is completely visible since, as illustrated in the right part of figure 3, the sector of the animation in the form of a circle sector ceased to obscure it.

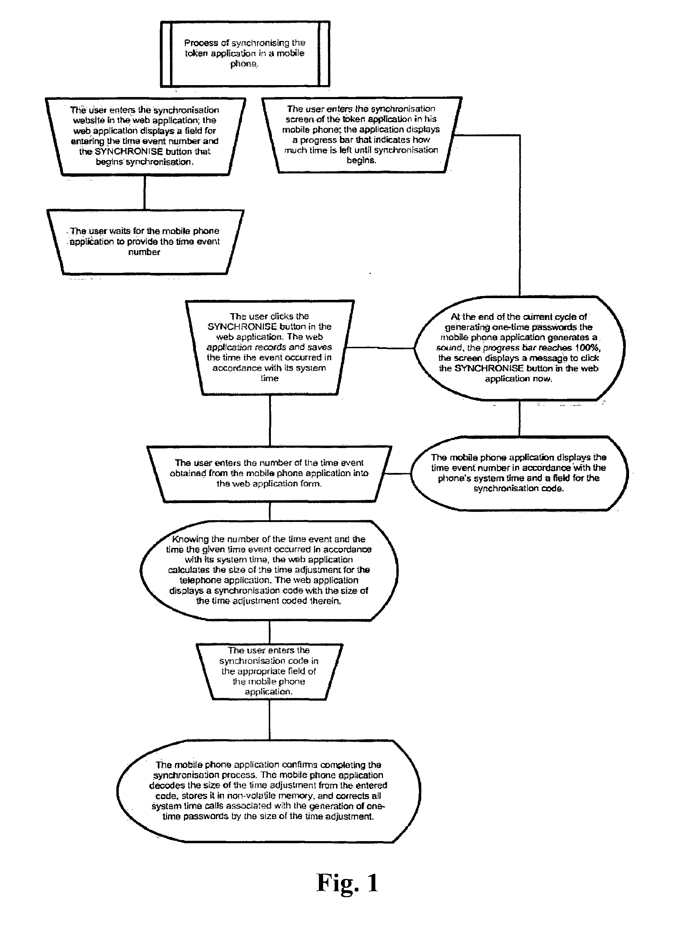

As shown in figure 1, the client compares the information provided by both applications in the manner illustrated in figure 3. Therefore, if the moments of beginning the generation of a one-time access password by both applications are identical or approximate and both applications, upon revealing, provide identical one-time passwords to access the server's web application, then by using this one-time password the user may log in to the server.

It would be impossible if the moments of beginning the generation of a one-time access password by both applications were not at least approximate or if, upon revealing, both applications provided different one-time passwords to access the server's web application. In such a case it is necessary to conduct synchronisation of those applications. The aim of such synchronisation is to shift the moment of beginning the entering of the access password in the mobile phone application so that this moment is approximate with the moment provided by the server's web application and the passwords provided by both applications are identical.

As shown in figure 1 the client then enables the synchronisation option in both applications. Within the mobile phone application an information is generated and displayed to the client regarding the moment when the generation of the given one-time access password was completed and the generation of the next one-time access password was initiated. This information is provided to the client visually, in the form of the word "NOW" being displayed, as well as acoustically. At the same time the mobile phone application generates and provides to the client visually a coded information about the number of this time event in accordance with the mobile phone's system time.

Upon hearing the acoustic signal and noticing the displayed word, the client immediately clicks the synchronisation button in the screen of the web application monitor. The web application then records and saves the moment of this event in accordance with its system time.

After entering the number of this time event into the web application according to the system time of the mobile phone the application calculates the size of the time adjustment that must be entered in the mobile phone application and presents the size of this time adjustment to the client in such a manner that it generates a synchronisation code containing information about the size of this adjustment. The client enters this code into the mobile phone application. Basing on the information contained in this code the mobile phone application determines the size of the time adjustment required so that all system time calls pertaining to the generation of one-time access passwords.

At this moment the client immediately clicks the synchronisation button on the screen of the web application monitor which then records and saves the moment this event took place in accordance with its own system time. After entering the number of this time event into the web application according to the system time of the mobile phone the web application calculates the size of the time adjustment that must be entered in the mobile phone application and presents the size of this time adjustment to the client in such a manner that it generates a synchronisation code containing information about the size of this adjustment. The client enters this code into the mobile phone application and on its basis the size of the time adjustment for the mobile phone is determined so that both the moment of beginning the entering of the password to access the server in the mobile phone application and the one-time password to access the server are identical.

The information about the size of the time adjustment is provided to client by the server's web application in the form of a synchronisation code. After the code is entered in the mobile phone application all system time calls pertaining to the generation of one-time access passwords are adjusted so that both the moment of beginning the entering of the password to access the server in the mobile phone application and the one-time password to access the server generated and provided by it are identical to those generated by the server's web application. Afterwards the synchronisation process is complete.

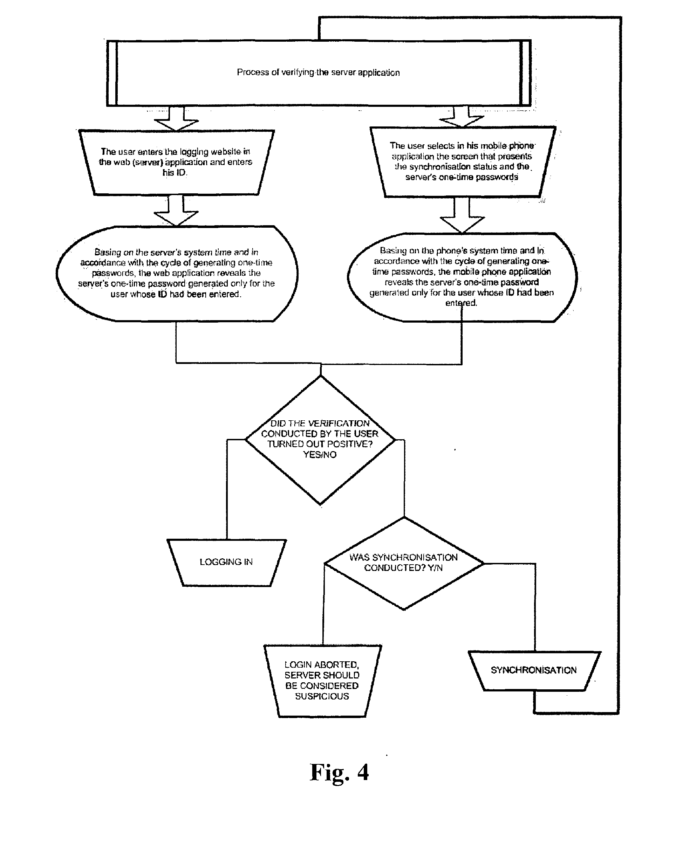

According to the present invention verification of a server is also possible before logging in to it. As shown in figure 4, to this end the client launches two applications: the mobile phone application and the server's web application.

After launching both applications the client determines whether or not and to what degree the moment of beginning the generation of the one-time access password within the mobile phone application differs from the moment of beginning the generation of the same access password within the web application of the server and whether or not the one-time access passwords generated by both application are identical.

As presented in figure 3, to this end the mobile phone application and server's web application then generate and present to the client basing on their respective system times visual animations in the form of a sector of a circle. The size of this sector changes depending on the time that has elapsed from the start of validity of a one-time password generated by the given application. In particular, as shown in the left part of figure 3, at the beginning of the time of validity of a one-time password the circle sector is complete and decreases in size with the passage of time of validity of this one-time password. By the end of validity of the password, as shown in the right part of figure 3, the size of the circle sector decreases to 0%. A sample transitional state is shown in the central part of figure 3.

Basing on their respective system times both the mobile phone application and the server's web application generate and present to the client a coded information about the current one-time password to access the server. As shown in the left part of figure 3, in the beginning stages of validity of the password this information is completely covered by the circle sector animation and as a result - completely invisible. As its time of validity elapses, the information is gradually revealed, as illustrated in the central part of figure 3. By the end of the time of validity of a one-time password to access the server application the information about the current one-time password to access the server application provided by the given application is completely visible since, as illustrated in the right part of figure 3, the sector of the animation in the form of a circle sector ceased to obscure it.

As shown in figure 4, the client compares the information provided by both applications in the manner illustrated in figure 3. Therefore, if the moments of beginning the generation of a one-time access password by both applications are identical or approximate and both applications, upon revealing, provide identical one-time passwords to access the server's web application, then by using this one-time password the user may log in to the server.

If the moments of beginning the generation of a one-time access password by both applications are not at least approximate or if, upon revealing, both applications provide different one-time passwords to access the server's web application, a synchronisation of those applications will be required in accordance with the method illustrated in figure 1.

As shown in figure 4, if after conducting the synchronisation the moments of beginning the generation of a one-time access password by both applications still are not at least approximate or if, upon revealing, both applications still provide different one-time passwords to access the server's web application, then the server should be considered suspicious and should not be logged in to.

## Claims

1. Method for generating within a mobile phone application a time-limited client password that enables access to protected server resources, which is identical to the password generated by the web application of the server, characteristic in that the moment of beginning the entering of this access password into the mobile phone application is shifted by the time at which this moment is identical or approximate to the moment of beginning the generation of the same access password within the web application of the server.

2. Method according to claim 1, characteristic in that within the mobile phone application there is generated and communicated to the client visually and/or acoustically an information about the moment in which the generation of the given access password was completed and generation of the next access password was initiated, as well as an information about the number of this time event in accordance with system time of the mobile phone; at this moment the client immediately clicks the synchronisation button on the screen of the web application monitor which then records and saves the moment this event took place in accordance with its own system time, and after entering the number of this time event into the web application according to the system time of the mobile phone the web application calculates the size of the time adjustment that must be entered in the mobile phone application and presents the size of this time adjustment to the client in such a manner that it generates a synchronisation code containing information about the size of this adjustment; the client enters this code into the mobile phone application that on its basis adjusts all system time calls pertaining to generation of one-time access passwords by the size of this time adjustment.

3. Method for verifying the synchronisation enabling the client to determine whether or not and to what degree the moment of beginning the generation of the access password within the mobile phone application, as mentioned in claim 1 or 2, differs from the moment of beginning the generation of the same access password within the web application of the server characteristic in that the mobile phone application and the server's web application generate and present to the client basing on their own system times visual animations, each with a sector of a geometric figure, whose size changes depending on the time that has elapsed from the beginning of validity of the given one-time password.

4. Method according to claim 3 characteristic in that the animation is a circle sector.

5. Method according to claims 3 or 4 characteristic in that the mobile phone application and the server's web application also present to the client basing on their own system times visually the information that enables explicit identification of the number of the time event.

6. Method according to claim 5 characteristic in that if the information that identifies the current number of a time event generated by the web application of the server is identical to the information identifying the number of the time event generated by the mobile phone application, then the information for the client constitutes the one-time access password to the server's application and it also authenticates the server.

7. Method according to claim 6 characteristic in that the information about the current time event number in the application that was generated and presented visually is invisible in the initial stages of validity of this password and becomes better visible with the passing of its time of validity.

8. Method according to claim 6 or 7 characteristic in that the information about the current time event number in the mobile phone that was generated and presented visually is completely covered by the animation of the geometric figure in the initial stages of validity of this password and becomes gradually uncovered by the animation with the passing of its time of validity.
